# EUROPÄISCHE PATENTSCHRIFT

(11) **EP 1 894 448 B1**
(45) Veröffentlichungstag und Bekanntmachung des Hinweises auf die Patenterteilung: **02.06.2010**
(21) Anmeldenummer: 06724291.7
(22) Anmeldetag: 12.04.2006
(51) Int. Cl.: H05B 41/288

(54) **VORRICHTUNG UND VERFAHREN ZUM BETREIBEN EINER HOCHDRUCKENTLADUNGSLAMPE**
DEVICE AND METHOD FOR OPERATING A HIGH-PRESSURE GAS DISCHARGE LAMP
DISPOSITIF ET PROCEDE PERMETTANT DE FAIRE FONCTIONNER UNE LAMPE A DECHARGE HAUTE PRESSION

(30) Priorität: 14.04.2005 EP 05008228
(43) Veröffentlichungstag der Anmeldung: 05.03.2008
(73) Patentinhaber: Osram Gesellschaft mit beschränkter Haftung, 81543 München (DE)
(72) Erfinder: SIESSEGGER, Bernhard, 81479 München (DE)
(86) Internationale Anmeldenummer: PCT/EP2006/003389
(87) Internationale Veröffentlichungsnummer: WO 2006/108645

(56) Entgegenhaltungen:
- EP-A- 0 477 621
- DE-A1- 3 715 162
- DE-A1- 10 210 717
- US-A- 4 358 712
- RODRIQUEZ F ET AL: "ANALYSIS AND DESIGN OF THE LCC-PARALLEL SERIES INVERTER WITH RESONANT CURRENT CONTROL AS HPS LAMP BALLAST" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001, ANNUAL POWER ELECTRONICS SPECIALISTS CONFERENCE, NEW YORK, NY : IEEE, US, Bd. VOL. 2 OF 4. CONF. 32, 17. Juni 2001 (2001-06-17), Seiten 980-985, XP001054209 ISBN: 0-7803-7067-8

## Beschreibung

Die Erfindung betrifft eine Vorrichtung zum Betreiben einer mit einer Zündhilfselektrode versehenen Hochdruckentladungslampe gemäß dem Oberbegriff des Anspruchs 1 und ein Verfahren zum Betreiben einer derartigen Hochdruckentladungslampe.

### I. Stand der Technik

Die noch unveröffentlichte deutsche Patentanmeldung mit dem amtlichen Aktenzeichen 10 2004 052299.5 beschreibt eine Vorrichtung zum Betreiben einer mit einer Zündhilfselektrode versehenen Hochdruckentladungslampe mit einem Strom wechselnder Polarität, wobei die zum Zünden der Gasentladung in der Hochdruckentladungslampe erforderliche Zündspannung mittels eines Serienresonanzkreises erzeugt wird. Der Serienresonanzkreis umfasst einen Spartransformator, dessen erster, als Primärwicklung dienender Wicklungsabschnitt die Resonanzinduktivität bildet, die nach Beendigung der Zündphase der Hochdruckentladungslampe vom Lampenstrom durchflossen wird, und dessen zweiter, als Sekundärwicklung dienender Wicklungsabschnitt die Zündhilfselektrode der Hochdruckentladungslampe während der Zündphase mit der zum Zünden der Gasentladung in der Hochdruckentladungslampe erforderlichen Zündspannung versorgt. Während der vorgenannten Zündphase wird der Serienresonanzkreis mit einer Wechselspannung bzw. einem Wechselstrom beaufschlagt, dessen Frequenz nahe der Resonanzfrequenz des Serienresonanzkreises liegt, so dass an dem ersten Wicklungsabschnitt des Spartransformators und an der Resonanzkapazität des Serienresonanzkreises während der Zündphase eine resonanzüberhöhte Wechselspannung zur Verfügung steht, die mittels des zweiten Wicklungsabschnitts des Spartransformators entsprechend dem Verhältnis der Windungsmahlen von zweitem und erstem Wicklungsabschnitt verstärkt wird, so dass an der Zündhilfselektrode der Hochdruckentladungslampe die zum Zünden der Gasentladung erforderliche Zündspannung anliegt. Nach erfolgter Zündung der Gasentladung in der Hochdruckentladungslampe ist die Entladungsstrecke zwischen den Hauptelektroden der Hochdruckentladungslampe leitfähig, so dass die Resonanzkapazität des Serienresonanzkre,ises durch das leitfähige Entladungsplasma zwischen den Hauptelektroden der Hochdruckentladungslampe nahezu kurzgeschlossen wird und der Lampenstrom durch den ersten Wicklungsabschnitt des Spartranstömiaiors fließt. Im Fall eines Hochfrequenzbetriebs der Hochdruckentladungslampe, der insbesondere bei Hochdruckentladungslampen für Fahrzeugschcinwerfer zur Vermeidung von akustischen Resonanzen im Entladungsmedium erforderlich ist, verursacht der hochfrequente Lampenstrom in dem ersten Wicklungsabschnitt des Spartransformators, der als Resonanzinduktivität dient, einen erheblichen Spannungsabfall und damit eine große Blindleistung, die einen schlechten Wirkungsgrad der Vorrichtung zur Folge hat.

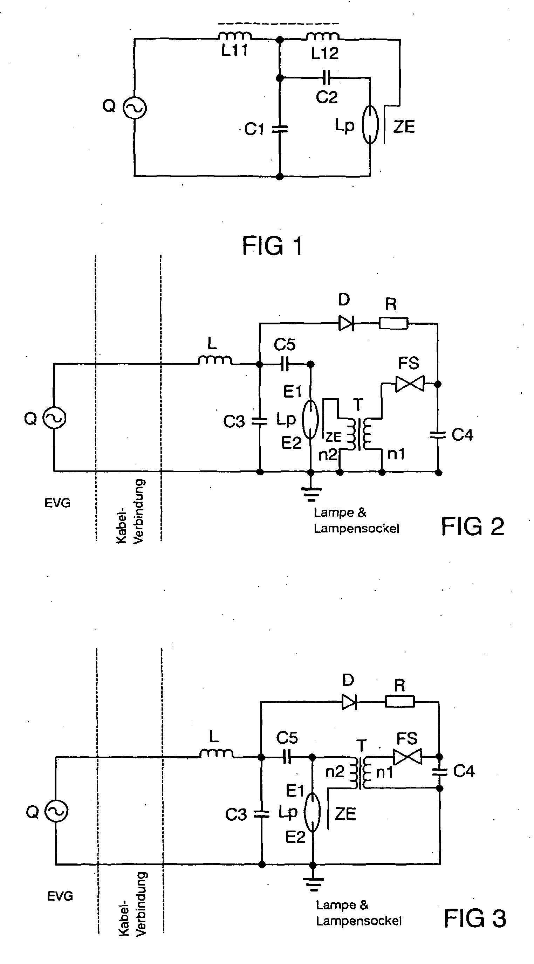

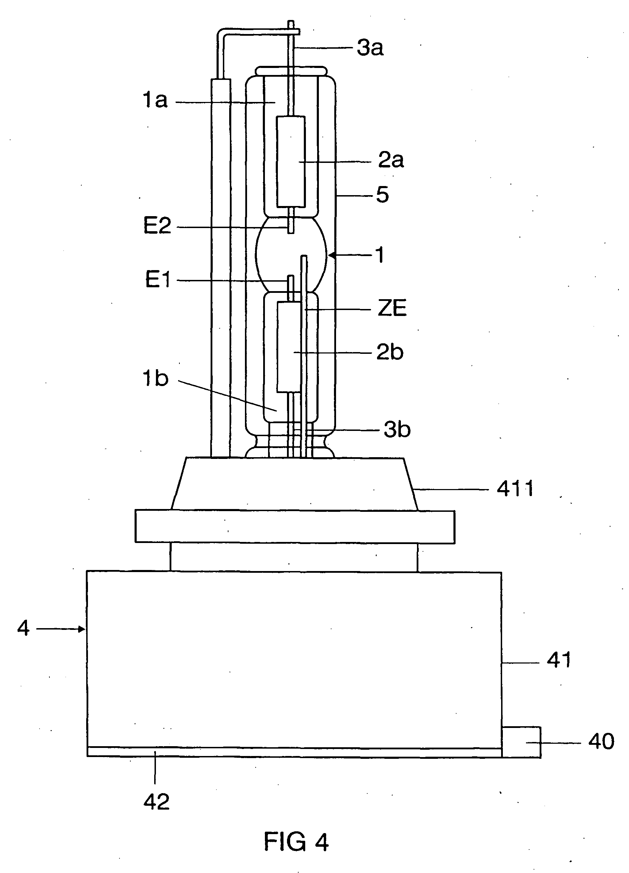

Den selben Nachteil besitzt die in der noch unveröffentlichte deutsche Patentanmeldung mit dem amtlichen Aktenzeichen 10 2004 05600.2 beschriebene Vorrichtung in den Ausführungsformen gemäß der Figuren 3 und 4. Die in der letztgenannten Patentanmeldung beschriebene Vorrichtung dient ebenfalls zum Betreiben einer mit einer Zündhilfselektrode versehenen Hochdruckentladungslampe mit einem Strom wechselnder Polarität, die zum Zünden der Gasentladung in der Hochdruckentladungslampe erforderliche Zündspannung wird jedoch im Unterschied zur erstgenannten Patentanmeldung mittels einer Impulszündvomchtung erzeugt. Die Versorgung der Impulszündeinheit sowie eine ausreichend hohe Spannung zwischen den beiden Hauptelektroden der Hochdruckentladungslampe für die Zündung der Hochdruckentladungslampe wird mittels eines Scrienresonanzkreises gemäß der in den Figuren 3 und 4 beschriebenen Ausführungsformen ermöglicht. Die Resonanzinduktivität dieses Serienresonanzkreises hat bei einem Betrieb der Lampe mit einem hochfrequente Lampenstrom den selben Nachteil zur Folge wie sie für die erstgenante Patentanmeldung bereits oben erläutert worden ist.

Die EP 0 477 621 A1 offenbart eine Betriebsvorrichtung für eine Entladungslampe, die zum Zünden der Gasentladung in der Entladungslampe Hochspannungsimpulse generiert und der resonanzüberhöhten Spannung eines Resonanzkreises überlagert.

### 1. Darstellung der Erfindung

Es ist Aufgabe der Erfindung, bei einer gattungsgemäßen Vorrichtung die vorgenannten Nachteile zu vermeiden und ein entsprechendes Betriebsverfahren für eine Hochdruckentladungslampe anzugeben, bei dem diese Nachteile vermieden werden.

Diese Aufgabe wird erfindungsgemäß durch die Merkmale des Anspruchs 1 bzw. 7 gelöst. Besonders vorteilhafte Ausführungen der Erfindung sind in den abhängigen Ansprüchen beschrieben.

Die erfindungsgemäße Vorrichtung zum Betreiben einer mit einer Zündhilfselektrode versehenen Hochdruckentladungslampe mit einem Strom wechselnder Polarität umfasst einen Serienresonanzkreis mit einer während des Lampenbetriebs vom Lampenstrom durchflossenen Resonanzinduktivität und eine Zündvorrichtung zum Beaufschlagen der Zündhilfselektrode mit der zum Zünden der Gasentladung in der Hochdruckentladungslampe erforderlichen Zündspannung, wobei ein kapazitives Bauteil vorgesehen ist, das in Serie zur Resonanzinduktivität geschaltet ist und derart dimensioniert ist, dass das kapazitive Bauteil nach erfolgter Zündung der Gasentladung in der Hochdruckentladungslampe zumindest eine partielle Kompensation der Induktivität der vom Lampenstrom durchflossenen Resonanzinduktivität bewirkt. Das heißt, dass die Kapazität des vorgenannten kapazitiven Bauteils derart auf den Induktivitätswert der Resonanzinduktivität und auf die Frequenz des Lampenstroms abgestimmt ist, dass die Induktivität der vom Lampenstrom durchflossenen Resonanzinduktivität durch das kapazitive Bauteil zumindest partiell kompensiert wird. Entsprechend dem Grad der Kompensation wird die vom Lampenstrom verursachte Blindleistung in der Resonanzinduktivität und in dem dazu in Serie geschalteten kapazitiven Bauteil reduziert und der Wirkungsgrad der Vorrichtung erhöht.

Vorteilhafterweise ist die Resonanzfrequenz des Serienresonanzkreises größer 300 kHz, insbesondere größer als 600 kHz, um eine Anregung akustischer Resonanzen im Entladungsmedium der Hochdruckentladungslampe während des Lampenbetriebs zu vermeiden. Für Lampen wie sie in der Allgemeinbeleuchtung eingesetzt werden, sind für Frequenzen größer 220 kHz bei einer Nennleistung von 70 W bzw. für Frequenzen und größer 340 kHz bei einer Nennleistung von 35 W keine negativen Auswirkungen durch akustische Resonanzen mehr zu erwarten, wie dies E. Statnic im Artikel "Zum Hochfrequenzbetrieb von Halogen-Metalldampflampen kleiner Leistung" in den "Technisch wissenschaftliche Abhandlungen der OSRAM-Gesellschaft", 12. Band, Springer-Verlag, Berlin, 1986 auf den Seiten 394 bis 407 beschreibt. Für sehr viele Lampen kann daher 300 kHz als Grenze angesehen werden. Für Hochdruckentladungslampe wie sie im Kraftfahrzeug eingesetzt werden, so genannte D-Lampen, ergibt sich diese Grenze zu 600 bis 800 kHz, wie anhand eigener Messungen ermittelt wurde.

Die Kapazität des kapazitiven Bauteils liegt vorteilhafterweise im Bereich von -12 pF bis 470pF, um zum Einen eine ausreichende Kompensation der Induktivität der Resonanzinduktivität bei einem Lampenstrom zu gewährleisten, dessen Frequenz im Bereich einiger hundert Kiloherz bis einiger Megahertz liegt, und zum Anderen eine starke Überkompensation und damit eine Belastung der speisenden Wechselspannungsquelle mit induktiver Blindleistung zu vermeiden.

Die betrachteten Hochdruckentladungslampen sind Wechselstromlampen. Ein Gleichstromfluss durch solche Lampen führt zu einer starken Beanspruchung der Elektroden und damit einhergehend zu einer stark verkürzten Lebensdauer. Darüber hinaus kann ein Gleichstrom zu einer Entmischung der verschiedenen Füllungsbestandteile während des Betriebes der Hochdruckgasentladungslampe längs des Entladungsgefäßes führen, was zu schlechten optischen Eigenschaften führt. Durch das erfindungsgemäß in Reihe zur Lampe geschaltete kapazitiven Bauteils, welches primär eine Kompensation der Induktivität der Resonanzinduktivität zur Aufgabe hat, wird ein Gleichstromfluss durch die Lampe sicher verhindert.

Die erfindungsgemäße Vorrichtung umfasst vorteilhafterweise mindestens einen Spannungswandler, um eine Regelung des Lampenstroms oder der Lampenleistung zu ermöglichen.

Gemäß den bevorzugten Ausführungsbeispielen der Erfindung ist die Zündvorrichtung entweder als Impulszündvorrichtung ausgebildet oder umfasst ein induktives Bauelement, das an die Resonanzinduktivität des Serienresonanzkreises gekoppelt ist, um im ersten Fall durch die resonanzüberhöhte Spannung der Resonanzinduktivität eine ausreichend hohe Spannung zwischen den beiden Hauptelektroden der Hochdruckentladungslampe für die Zündung der Gasentladung über die Zündhilfselektrode bereitzustellen oder im zweiten Fall die resonanzüberhöhte Spannung der Resonanzinduktivität, verstärkt um das Windungszahlenverhältnis von induktivem Bauelement und Resonanzinduktivität, unmittelbar an die Zündhilfselektrode weiter zu geben. Im ersten Fall kann die resonanzüberhöhte Spannung der Resonanzinduktivität zudem als Versorgungsspannung an die Impulszündvorrichtung weiter gegeben werden. Das erfindungsgemäße Verfahren zum Betreiben einer mit einer Zündhilfselektrode versehenen Hochdruckentladungslampe mit einem Strom wechselnder Polarität beinhaltet den Betrieb der Hochdruckentladungslampe mittels eines Serienresonanzkreises, dessen Resonanzinduktivität nach erfolgter Zündung der Gasentladung in der Hochdruckentladungslampe vom Lampenstrom durchflossen wird, und der zumindest während der Zündphase der Hochdruckentladungslampe eine resonanzüberhöhte Spannung an den Hauptelektroden der Hochdruckentladungslampe bereitstellt, wobei nach erfolgter Zündung der Gasentladung in der Hochdruckentladungslampe die Induktivität der vom Lampenstrom durchflossenen Resonanzinduktivität des Serienresonanzkreise mittels eines in Serie dazu geschalteten kapazitiven Bauteils zumindest partiell kompensiert wird. Durch die zumindest partielle Kompensation der Induktivität der vom Lampenstrom durchflossenen Resonanzinduktivität wird die Blindleistung in der Serienschaltung von Resonanzinduktivität und kapazitivem Bauteil während des Lampenbetriebs reduziert und der Wirkungsgrad entsprechend dem Grad der Kompensation erhöht.

Um einen möglichst hohen Wirkungsgrad zu erzielen und den Aufwand für eine elektromagnetische Abschirmung der Vorrichtung und der Hochdruckentladungslampe möglichst gering zu halten, wird der Serienresonanzkreis zum Zünden der Gasentladung in der Hochdruckentladungslampe mit einem Wechselstrom beaufschlagt, dessen Frequenz in einem ersten, nahe bei der Resonanzfrequenz des Serienresonanzkreises liegenden Frequenzbereich liegt, und nach erfolgter Zündung der Gasentladung in der Hochdruckentladungslampe werden die Resonanzinduktivität des Serienresonanzkreises und die Hochdruckentladungslampe mit einem Wechselstrom beaufschlagt, dessen Frequenz in einem zweiten, unterhalb der Resonanzfrequenz des bisher betrachteten, näherungsweise ungedämpften Serienresonanzkreises liegenden Frequenzbereich angeordnet ist.

Der zweite Frequenzbereich liegt vorzugsweise oberhalb von 300 kHz, insbesondere oberhalb von 600 kHz, um während des Lampenbetriebs die Anregung von akustischen Resonanzen in dem Entladungsmedium der Hochdruckentladungslampe zu vermeiden.

Der erste Frequenzbereich erstreckt sich vorzugsweise auf Frequenzen, die oberhalb der Resonanzfrequenz des Serienresonanzkreises liegen, und umfasst vorzugsweise auch die Resonanzfrequenz des Serienresonanzkreises. Dadurch ist gewährleistet, dass bei der Verringerung der Frequenz des Wechselstroms bzw. der Wechselspannung während der Zündphase und des nachfolgenden Lampenbetriebs die Resonanzfrequenz des Serienresonanzkreises mit hinreichender Genauigkeit getroffen wird, um eine ausreichende Resonanzüberhöhung der Spannung an der Resonanzinduktivität und der Resonanzkapazität des Serienresonanzkreises zu gewährleisten. Nach der Zündung der Lampe wird der Serienresonanzkreis stark bedämpft, so dass sicher gestellt wird, dass eine Einkopplung von weiteren Zündspannungsimpulsen über die Zündhilfselektrode während, des Lampenbetriebs nach Beendigung der Zündphase unterbleibt.

Bei der erfindungsgemäßen Vorrichtung handelt es sich vorzugsweise um ein Elektronisches Vorschaltgerät für eine Hochdruckentladungslampe, insbesondere für eine Halogen-Metalldampf-Hochdruckentladungslampe, die als Lichtquelle in einem Fahrzeugscheinwerfer verwendet wird. Zumindest einige Komponenten dieser Vorrichtung, insbesondere die Hochspannung führenden Komponenten der Zündvorrichtung, sind vorzugsweise im Lampensockel der Hochdruckentladungslampe untergebracht. Dadurch müssen die aus dem Lampensockel herausgeführten elektrischen Anschlüsse der Hochdruckentladungslampe nicht hochspannungsfest ausgebildet werden.

Vorteilhafterweise wird zum Erzeugen der für den Betrieb des Serienresonanzkreises und der Hochdruckentladungslampe erforderlichen Wechselspannung ein einstufiger Spannungswandler verwendet, der diese Wechselspannung unmittelbar aus der Bordnetzspannung des Fahrzeugs generiert. Der einstufige Spannungswandler besteht aus nur wenigen Komponenten, die im Lampensockel untergebracht werden können.

### III. Beschreibung der bevorzugten Ausführungsbeispiele

Nachstehend wird die Erfindung anhand von zwei bevorzugten Ausführungsbeispielen näher erläutert. Es zeigen:
- Figur 1: Die Schaltungsanordnung gemäß dem ersten, zweiten und dritten Ausführungsbeispiel der erfindungsgemäßen Vorrichtung
- Figur 2: Die Schaltungsanordnung gemäß dem vierten und sechsten Ausführungsbeispiel der erfindungsgemäßen Vorrichtung
- Figur 3: Die Schaltungsanordnung gemäß dem fünften und siebten Ausführungsbeispiel der erfindungsgemäßen Vorrichtung
- Figur 4: Eine schematische Darstellung einer Hochdruckentladungslampe für einen Fahrzeugscheinwerfer

Bei der in Figur 4 schematisch dargestellten Hochdruckentladungslampe Lp, die mit Hilfe der Vorrichtung gemäß den bevorzugten Ausführungsbeispielen betrieben wird, handelt es sich um eine Halogen-Metalldampf-Hochdruckentladungslampe für einen Kraftfahrzeugscheinwerfer.

Diese Hochdruckentladungslampe Lp besitzt ein Entladungsgefäß 1 aus Quarzglas, in dem eine ionisierbare Füllung gasdicht eingeschlossen ist. Die ionisierbare Füllung enthält Xenon und Metallhalogenidverbindungen, vorzugsweise Jodide der Metalle Natrium, Scandium, Zink und Indium und ionisierbare Füllung enthält vorzugsweise kein Quecksilber. Der Xenon-Kaltfülldruck beträgt ca. 10 bar. Die beiden Enden 1a, 1b des Entladungsgefäßes 1 sind jeweils mittels einer Molybdänfolien-Einschmelzung 2a, 2b abgedichtet. Im Innenraum des Entladungsgefäßes 1 befinden sich zwei Elektroden E1, E2, zwischen denen sich während des Lampenbetriebes der für die Lichtemission verantwortliche Entladungsbogen ausbildet. Diese Hauptelektroden E1, E2 sind jeweils über eine der Molybdänfolien-Einschmelzungen 2a, 2b elektrisch leitend mit einer aus dem Entladungsgefäß 1 herausgeführten Stromzuführung 3a, 3b verbunden. Das Entladungsgefäß 1 wird von einem gläsernen Außenkolben 5 umhüllt. Die Zündhilfselektrode ZE wird hier bei diesem Ausführungsbeispiel der Erfindung von einer dünnen metallischen Beschichtung auf der inneren Oberfläche des Außenkolbens 5 gebildet. Alternativ kann diese Beschichtung aber auch auf der Außenseite des Entladungsgefäßes 1 oder auf der Außenseite des Außenkolbens 5 angebracht sein. Die dünne metallische Beschichtung ZE besitzt die Form eines lang gestreckten Streifens, der sich vom sockelnahen Ende des Außenkolbens 5 ungefähr bis auf die Höhe des Entladungsgefäßmittelpunktes erstreckt. Die Lampengefäße 1, 5 sind im aus Kunststoff bestehenden Oberteil 411 eines Lampensockels 4 fixiert. Der quaderförmige Teil des Lampensockels 4 ist von einem zweiteiligen metallischen Gehäuse 41, 42 umgeben, das zur elektromagnetischen Abschirmung der im Innenraum des Lampensockels 4 untergebrachten Impulszündvorrichtung dient. Der elektrische Anschluss 40 der Hochdruckentladungslampe La dient zur Spannungsversorgung der Hochdruckentladungslampe und der im Lampensockel 4 angeordneten Impulszündvorrichtung. Der elektrische Anschluss 40 ist über ein abgeschirmtes Verbindungskabel (nicht abgebildet) mit dem Betriebsgerät EVG (nicht abgebildet) für die Hochdruckentladungslampe verbunden. Das Abschirmgeflecht des Verbindungskabels ist mit dem schaltungsinternen Massepotential des Betriebsgerätes und über einen Kontakt des elektrischen Anschlusses 40 mit dem Metallgehäuse 41, 42 verbunden, so dass das Metallgehäuse 41, 42 ebenfalls auf Massepotential liegt.

In einer weiteren Ausführung der Hochdruckentladungslampe Lp gemäß Figur 4, ist der Spannungswandler samt der erfindungsgemäßen Vorrichtung zum Betrieben der Hochdruckentladungslampe im dem Metallgehäuse 41, 42 untergebracht und über den elektrischen Anschluss 40 wird die Bordnetzspannung des Kraftfahrzeuges zugeführt. Diese Ausführung ist insbesondere im Fall eines einstufigen Spannungswandlers wegen seiner geringen Anzahl an Komponenten besonders vorteilhaft.

Das in Figur 1 schematisch dargestellte erste Ausführungsbeispiel der erfindungsgemäßen Vorrichtung besteht aus einem Spartransformator L11, L12 und einem Kondensator C1. Der Spartransformator besitzt eine Wicklung mit einem ersten Wicklungsabschnitt L11, der als Primärwicklung ausgebildet ist, und mit einem zweiten Wicklungsabschnitt L12, der als Sekundärwicklung des Transformators ausgebildet ist. Der Kondensator C1 und der Primärwicklungsabschnitt L11 sind als Serienresonanzkreis geschaltet, der an die Wechselspannungsquelle Q angeschlossen ist. Die Resonanzfrequenz des Serienresonanzkreises wird vorzugsweise oberhalb 800 kHz, insbesondere oberhalb von 1 MHz gewählt, was in einer kleinen Baugröße und einer besonders geringen erforderlichen Spannung an der Zündhilfselektrode resultiert. Die Frequenz der Versorgungsspannung bzw. des Versorgungsstroms wird während der Zündphase nahe der Resonanzfrequenz des Serienresonanzkreises gewählt bzw. derart gewählt, dass eine Oberschwingung des Versorgungssignals zu einer Anregung des Serienresonanzkreises während der Zündphase führt.

Der Mittenabgriff zwischen den beiden Wicklungsabschnitten L11, L12, der als gemeinsamer erster Anschluss der Wicklungsabschnitte L11, L12 ausgebildet ist, ist sowohl mit dem ersten Anschluss des Kondensators C2 als auch mit dem ersten Anschluss des Kondensators C1 verbunden. Der zweite Anschluss des Primärwicklungsabschnitts L11 ist mit der Wechselspannungsquelle Q verbunden, während der zweite Anschluss des Sekundärwicklungsabschnitts L12 mit der Zündhilfselektrode ZE der Hochdruckentladungslampe Lp verbunden ist. Der zweite Anschluss des Kondensators C1 ist mit der Wechselspannungsquelle Q und der zweite Elektrode E2 der Hochdruckentladungslampe Lp verbunden. Der zweite Anschluss des Kondensators C2 ist mit der ersten Elektrode E1 der Hochdruckentladüngslampe Lp verbunden. Der Kondensator C1 ist parallel zu der Serienschaltung von Kondensator C2 und Entladungsstrecke der Lampe Lp geschaltet. Bei der Lampe Lp handelt es sich beispielsweise um eine quecksilberfreie Halogen-Metalldampf-Hochdruckentladungslampe, mit einer Nennleistung von 35 W und einer Nennspannung von 42 V die als Lichtquelle in einem Fahrzeugscheinwerfer vorgesehen ist. Das Entladungsgefäß dieser Hochdruckentladungslampe Lp besteht entweder aus einer lichtdurchlässigen Keramik, beispielsweise aus Aluminiumoxidkeramik, oder aus Quarzglas. Der Resonanzkondensator C1 besitzt eine Kapazität von 94 pF (bei einer Frequenz von 1 kHz und geringer Amplitude gemessen). Der Primärwicklungsabschnitt L11 besitzt 70 Windungen und eine Induktivität von 100 µH (bei einer Frequenz von 1 kHz und geringer Amplitude gemessen). Der Sekundärwicklungsabschnitt L 12 besitzt 95 Windungen. Der Kondensator C2 besitzt eine Kapazität von 270 pF (bei einer Frequenz von 1 kHz und geringer Amplitude gemessen).

Zum Betreiben der oben genannten Hochdruckentladungslampe Lp mit einem Entladungsgefäß aus Quarzglas wird eine Wechselspannungsquelle Q verwendet, die eine nahezu sinusförmige Wechselspannung mit einem Effektivwert von 195 V und einer Frequenz von 1,234 MHz besitzt. Zum Zünden der Gasentladung in der Hochdruckentladungslampe Lp wird die Frequenz der von der Wechselspannungsquelle Q bereitgestellten Wechselspannung auf die Resonanzfrequenz des Serienresonanzkreises C1, L11 abgestimmt, so dass sich an den Bauteilen C1 und L11 eine resonanzüberhöhte Wechselspannung mit einem Spitzenwert von 1500 Volt aufbaut. Diese Spannung liegt auch an der Entladungsstrecke zwischen den beiden Elektroden der Hochdruckgasentladungslampe Lp an, da der Resonanzkondensator C1 parallel zur Entladungsstrecke der Lampe Lp geschaltet ist. Mittels des Sekundärwicklungsabschnitts L12 wird der Zündhilfselektrode ZE eine Wechselspannung mit einem Spitzenwert von 4000 Volt zugeführt. Zwischen der Zündhilfselektrode Z und der mit der Wechselspannungsquelle Q und einem Anschluss des Resonanzkondensators C1 verbundenen Elektrode der Hochdruckentladungslampe Lp besteht daher eine Spannungsdifferenz von 4000 Volt, die zusammen mit der Spannungsdifferenz zwischen den Elektroden zum Zünden der Gasentladung in der Lampe Lp ausreicht. Nach erfolgter Zündung der Gasentladung in der Hochdruckentladungslampe Lp wird die Zündvorrichtung automatisch deaktiviert, da die Hochdruckentladungslampe dann den Resonanzkreis stark bedämpft. Die Frequenz der von der Wechselspannungsquelle Q generierten Wechselspannung wird nach der Zündung so eingestellt, dass sich die gewünschte Lampenleistung bzw. der gewünschte Lampenstrom einstellt. Während des Betriebs der Hochdruckentladungslampe Lp wird der Primärwicklungsabschnitt L 11 zur Stabilisierung der Entladung, das heißt, zur Begrenzung des Lampenstroms, benutzt. Der Kondensator C2 bewirkt eine partielle Kompensation der Induktivität des nach Beendigung der Zündphase vom Lampenstrom durchflossenen Primärwicklungsabschnitts L11. So ist die Frequenz der Wechselspannungsquelle Q auf ca. 710 kHz einzustellen, wenn diese eine nahezu sinusförmige Wechselspannung mit einem Effektivwert von 128 V bereitstellt, um nach dem Verdampfen der Metallhalogenide den Betrieb der Hochdruckgasentladungslampe mit Nennleistung zu gewährleisten.

Um zu gewährleisten, dass die Frequenz der von der Wechselspannungsquelle generierten Wechselspannung während der Zündphase ausreichend nahe bei der Resonanzfrequenz des wegen seiner hohen Güte sehr schmalbandigen Serienresonanzkreises liegt, kann während der Zündphase eine Frequenzmodulation der Wechselspannung durchgeführt werden. Hierfür eignen sich beispielsweise bei einer Mittenfrequenz von 1,230 MHz ein Frequenzhub von 50 kHz und ein sinusförmiges Modulationssignal mit 500 Hz.

Das zweite Ausführungsbeispiel besitzt ebenfalls den in Figur 1 dargestellten Aufbau und verwendet die bereits beschriebene Hochdruckentladungslampe, die allerdings bei einer Frequenz von ca. 21,6 MHz gezündet und anschließend bei einer Frequenz von ca. 13,6 MHz betrieben wird. Die Elemente L11, C1 und C2 besitzen dabei Werte von 7,8 µH, 7 pF und 12 pF.

Das dritte Ausführungsbeispiel besitzt ebenfalls den in Figur 1 dargestellten Aufbau. Als Hochdruckentladungslampe kommt eine quecksilberhaltige Lampe mit einer Nennleistung von 70 W und einer Nennspannung von 85 V zu Anwendung. Die Frequenz der Wechselspannungsquelle Q beträgt sowohl bei Zündung, wie auch im nachfolgenden Betrieb der Lampe etwa 308 kHz. Die Spannung ist jedoch nicht sinusförmig und so erfolgt die Zündung der Lampe mittels der im Spannungssignal der Wechselspannungsquelle Q enthaltenen 3. Harmonischen wohingegen im nachfolgenden Betrieb der Lampenstrom näherungsweise sinusförmig ist und eine Frequenz von 308 kHz besitzt. Die Wechselspannungsquelle Q wird durch eine Halbbrückenschaltung gebildet, so dass der Kondensator C2 neben einer partielle Kompensation der Induktivität des nach Beendigung der Zündphase vom Lampenstrom durchflossenen Primärwicklungsabschnitts L11 zudem eine Unterbindung eines Gleichstromflusses durch die Lampe bewirkt. Die Elemente L11, C1 und C2 besitzen dabei Werte von 670 µH, 45 pF und 470 pF.

In der Figur 2 ist die vierte Ausführungsform der erfindungsgemäßen Vorrichtung zum Betreiben der Hochdruckentladungslampe Lp inklusive der im Lampensockel 4 untergebrachten Bauteile D, R, FS, C4, T der Impulszündvorrichtung und eines Serienresonanzkreises L, C3 schematisch dargestellt. Die Bauteile L, C3 des Serienresonanzkreises sind ebenfalls im Lampensockel 4 untergebracht. Die Resonanzkapazität C3 ist parallel zu der Serienschaltung von Kondensator C5 und Entladungsstrecke der Hochdruckentladungslampe Lp geschaltet. Ein erster Anschluss der Sekundärwicklung n2 des Zündtransformators T ist mit dem schaltungsinternen Massebezugspotential verbunden. Der zweite Anschluss der Sekundärwicklung n2 des Zündtransformators T ist mit der Zündhilfselektrode ZE verbunden. Während der Zündphase der Hochdruckentladungslampe Lp wird der Serienresonanzkreis L, C3 in Resonanz betrieben, so dass an der Resonanzkapazität C3 und damit auch über der Entladungsstrecke der Hochdruckentladungslampe Lp sowie an dem Spannungseingang der Impulszündvorrichtung eine resonanzüberhöhte Wechselspannung bereitgestellt wird, die eine um den Faktor 2 bis 10 höhere Amplitude als die von der Wechselspannungsquelle Q generierte Wechselspannung besitzt. Mit Hilfe der Bauteile D, R, FS, C4, T der Impulszündvorrichtung werden daraus Hochspannungsimpulse für die Zündhilfselektrode ZE mit Spannungen im Bereich von ca. 5 kV bis 30 kV erzeugt. Eine geeignete Dimensionierung der elektrischen Bauteile der Impulszündvorrichtung und des Serienresonanzkreises zum Erzeugen einer Zündspannung von ca. 30 kV bzw. einer Zündspannung von ca. 7 kV ist in der Tabelle I bzw. 2 offenbart.

Bei dem Betriebsgerät EVG handelt es sich um einen Spannungswandler Q, der aus der Bordnetzspannung des Kraftfahrzeugs eine nahezu sinusförmige Wechselspannung mit einer Amplitude von ca. 100 V bis 500 V und einer Frequenz von ca. 2,7 MHz während der Zündphase der Hochdruckentladungslampe sowie einer Frequenz von ca. 1,8 MHz nach Beendigung der Zündphase generiert. Der Kondensator C5 bewirkt eine partielle Kompensation der Induktivität der nach Beendigung der Zündphase der Hochdruckentladungslampe Lp vom Lampenstrom durchflossenen Resonanzinduktivität L. Die Hochdruckentladungslampe Lp entspricht in ihren elektrischen Daten der bereits im Ausführungsbeispiel 1 beschriebenen Hochdruckentladungslampe.

Das in der Figur 3 schematisch dargestellte fünfte Ausführungsbeispiel der Erfindung unterscheidet sich von dem in Figur 2 abgebildeten vierten Ausführungsbeispiel nur dadurch, dass der erste Anschluss der Sekundärwicklung n2 des Zündtransformators T mit der auf hohem elektrischen Potential befindlichen Elektrode E1 und nicht mit dem schaltungsinternen Massebezugspotential verbunden ist. In allen anderen Details stimmen die in den Figuren 2 und 3 dargestellten Ausführungsbeispiele überein. Daher wurden in diesen Figuren identische Bauteile mit denselben Bezugszeichen versehen.

Nach erfolgter Zündung der Gasentladung in dem Entladungsgefäß 1 der Hochdruckentladungslampe Lp bildet die nun leitfähige Entladungsstrecke zwischen den beiden Elektroden E1, E2 einen Nebenschluss zu der Resonanzkapazität C3 und dem Spannungseingang der Impulszündvorrichtung, so dass die Spannung über der Entladungsstrecke und damit auch am Spannungseingang der Impulszündvorrichtung deutlich geringere Werte annimmt. Dadurch wird die Durchbruchsspannung der Funkenstrecke FS an dem Zündkondensator C4 nicht mehr erreicht und die Impulszündvorrichtung generiert keine weitere Zündimpulse für die Hochdruckentladungslampe Lp. Die Abschaltung der Impulszündvorrichtung erfolgt somit ohne weiteren Bauelementeaufwand. Der Kondensator C5 bewirkt eine partielle Kompensation der Induktivität der nach Beendigung der Zündphase der Hochdruckentladungslampe Lp vom Lampenstrom durchflossenen Resonanzinduktivität L.Zur Spannungsversorgung der Hochdruckentladungslampe Lp und der im Lampensockel 4 untergebrachten Impulszündvorrichtung genügt eine Zwei-Leiterverbindung zwischen dem Betriebsgerät EVG und dem Anschluss 40 der Hochdruckentladungslampe Lp, da die Impulszündvorrichtung direkt aus der an der Hochdruckentladungslampe Lp anliegenden Wechselspannung versorgt wird.

Das fünfte Ausführungsbeispiel besitzt den in Figur 2 dargestellten Aufbau. Als Hochdruckentlaidungslampe kommt eine quecksilberhaltige Lampe mit einer Nennleistung von 35 W und einer Nennspannung von 85 V, wie sie in Kraftfahrzeugen eingesetzt werden, zu Anwendung. Die Frequenz der Wechselspannungsquelle Q beträgt bei Zündung etwa 6,38 MHz, und im nachfolgenden Betrieb der Lampe etwa 3,1 MHz. Die Elemente L, C3 und C5 besitzen dabei Werte von 30 µH, 21 pF und 105 pF. Während des nominalen Betriebs, das heißt nachdem das Verdampfen der Metallhalogenide während des Anlaufs beendet ist, liefert die Wechselspannungsquelle Q eine nahezu sinusförmige Wechselspannung mit einem Effektivwert von 117 V und ermöglicht damit den Betrieb der Hochdruckgasentladungslampe mit Nennleistung.

Das in der Figur 3 schematisch dargestellte siebte Ausführungsbeispiel der Erfindung unterscheidet sich von dem sechsten Ausführungsbeispiel nur dadurch, dass der erste Anschluss der Sekundärwicklung n2 des Zündtransformators T mit der auf hohem elektrischen Potential befindlichen Elektrode E1 und nicht mit dem schaltungsinternen Massebezugspotential verbunden ist. In allen anderen Details stimmen die Ausführungsbeispiele sechs und sieben überein

Das Ausführungsbeispiel gemäß der Figur 1 kann um einen Gleichspannungstrennkondensator in Reihe zur Zündelektrode ergänzt werden, wie er in der noch unveröffentlichten deutschen Patentanmeldung mit dem amtlichen Aktenzeichen 10 2004 052299.5 in den Ausführungsbeispiel korrespondierend zur Figur 4, hier mit C42 bezeichnet, beschrieben wurde. Die Ausführungsbeispiele gemäß der Figuren 2 und 3 können um einen Gleichspannungstrennkondensator in Reihe zur Zündelektrode ergänzt werden, wie er in der noch unveröffentlichten deutschen Patentanmeldung mit dem amtlichen Aktenzeichen 10 2004 05600.2 in dem Ausführungsbeispiel korrespondierend zur Figur 6, hier mit C0 bezeichnet, beschrieben wurde.

**Tabelle 1: Dimensionierung der in den Figuren 2 und 3 abgebildeten elektrischen Bauteile zum Erzeugen einer Zündspannung von ca. 30 kV**

| | |
|---|---|
| C3 | 120 pF |
| C4 | 10 nF |
| C5 | 270 pF |
| D | Siliziumkarbid-Dioden in Reihe |
| FS | 2000 V |
| L | 30 µH |
| R | 33 kOhm |
| T | n1 = 2 Windungen, n2 = 40 Windungen |

**Tabelle 2: Dimensionierung der in den Figuren 2 und 3 abgebildeten elektrischen Bauteile zum Erzeugen einer Zündspannung von ca. 7 kV**

| | |
|---|---|
| C3 | 120 pF |
| C4 | 33 nF |
| C5 | 270 pF |
| D | Siliziumkarbid-Dioden in Reihe |
| FS | 800 V |
| L | 30 µH |
| R | 10 kOhm |
| T | n1 = 3 Windungen, n2 = 29 Windungen |

## Patentansprüche

1. Vorrichtung zum Betreiben einer mit einer Zündhilfselektrode (ZE) versehenen Hochdruckentladungslampe (Lp) mit einem Strom wechselnder Polarität und einer Frequenz größer als 300 kHz, wobei die Vorrichtung einen Serienresonanzkreis (L11, C1; L, C3) mit einer während des Lampenbetriebs vom Lampenstrom durchflossenen Resonanzinduktivität (L11; L) und einer Zündvorrichtung zum Beaufschlagen der Zündhilfselektrode (ZE) mit der zum Zünden der Gasentladung in der Hochdruckentladungslampe (Lp) erforderlichen Zündspannung umfasst, wobei die Vorrichtung ein kapazitives Bauteil (C2; C5) aufweist, das in Serie zur Resonanzinduktivität (L11; L) geschaltet ist, **dadurch gekennzeichnet, dass** die Resonanzfrequenz des Serienresonanzkreises (L11, C1; L, C3) oberhalb von 300 kHz und die Kapazität des kapazitiven Bauteils (C2; C5) im Bereich von 12 pF bis 470 pF liegt, so dass das kapazitive Bauteil (C2; C5) nach erfolgter Zündung der Gasentladung in der Hochdruckentladungslampe (Lp) zumindest eine partielle Kompensation der Induktivität der vom Lampenstrom durchflossenen Resonanzinduktivität (L11; L) bewirkt.

2. Vorrichtung nach Anspruch 1, wobei die Resonanzfrequenz des Serienresonanzkreises (L11, C1; L, C3) oberhalb von 600 kHz liegt..

3. Vorrichtung nach Anspruch 1, die im Lampensockel der Hochdruckentladungslampe untergebracht ist.

4. Vorrichtung noch Anspruch 1, wobei die Zündvorrichtung als lmpulszündvorrichtung ausgebildet ist.

5. Vorrichtung nach Anspruch 1, wobei die Vorrichtung ein induktives Bauelement (L12) aufweist, das an die Resonanzinduktivität (L11) des Serienresonanzkreises (L11, C1) gekoppelt ist und als Bestandteil der Zündvorrichtung ausgebildet ist,

6. Vorrichtung nach Anspruch 1, wobei die Vorrichtung mindestens einen Spannungswandler (Q) zum Erzeugen des Stroms wechselnder Polarität für die Hochdruckentladungslampe (Lp) umfasst.

7. Verfahren zum Betreiben einer mit einer Zündhilfselektrode (ZE) versehenen Hochdruckentladungslampe (Lp) mit einem Strom wechselnder Polarität, wobei mittels eines Sericnresonanzkreises (L11, C1, L, C3), dessen Resonanzinduktivität (L11; L) nach erfolgter Zündung der Gasentladung in der Hochdruckentladungslampe (Lp) vom Lampenstrom durchflossen wird, zumindest während der Zündphase der Hochdruckentladungslampe (Lp) eine resonanzüberhöhte Spannung an den Hauptelektroden (E1, E2) der Hochdruckentladungslampe (Lp) bereitgestellt wird, **dadurch gekennzeichnet, dass** die Frequenz des Stroms wechselnder Polarität und die Resonanzfrequenz des Serienresonanzkreises (L11, C1; L, C3) oberhalb von 300 kHz liegen und dass nach erfolgter Zündung der Gasentladung in der Hochdruckentladungslampe (Lp) die Induktivität der vom Lampenstrom durchflossenen Resonanzinduktivität (L 11; L) des Serienresonanzkreise (L 11, C1; L, C3) mittels eines in Serie dazu geschalteten kapazitiven Bauteils (C2; C5), dessen Kapazität im Bereich von 12 pF bis 470 pF liegt, zumindest partielle kompensiert wird.

8. Verfahren nach Anspruch 7, wobei die Resonanzfrequenz des Serienresonanzkreises (L11, C1; L, C3) oberhalb von 600 kHz liegt.

9. Verfahren nach Anspruch 7, wobei der Serienresonanzkreis (L11, C1; L, C3) zum Zünden der Gasentladung in der Hochdruckentladungslampe (Lp) mit einem Wechselstrom beaufschlagt wird, dessen Frequenz in einem ersten, nahe bei der Resonanzfrequenz des Serienresonanzkreises (L11, C1; L, C3) liegenden Frequenzbereich liegt, und nach erfolgter Zündung der Gasentladung in der Hochdruelcentsadungslampe (Lp) die Resonanzinduktivität (L11; L) des Serienresonanzkreise (L11, C1; L, C3) und die Hochdruckentladungslampe (Lp) mit einem Wechselstrom beaufschlagt werden, dessen Frequenz in einem zweiten, unterhalb der Resonanzfrequenz des Serienresonanzkreises (L11, C1; L, C3) und oberhalb von 300 kHz liegenden Frequenzbereich angeordnet ist.

10. Verfahren nach Anspruch 9, wobei der erste Frequenzbereich sich auf Frequenzen oberhalb der Resonanzfrequenz des Serienresonanzkreises (L 11, C1; L, C3) erstreckt.

11. Verfahren nach Anspruch 9, wobei die Frequenz des vom Spannungswandler (Q) während der Zündung der Hochdruckentladungslampe (Lp) bereitgestellten Stroms größer ist als die Frequenz des nach der Zündung der Hochdruckentladungslampe (Lp) bereitgestellten Stroms.

## Claims

1. Device for operating a high-pressure discharge lamp (Lp), which has been provided with an auxiliary ignition electrode (ZE), with a current of alternating polarity and a frequency of greater than 300 kHz, the device comprising a series resonant circuit (L11, C1; L, C3) having a resonant inductance (L11; L), through which the lamp current flows during lamp operation, and an ignition device for applying the ignition voltage required for igniting the gas discharge in the high-pressure discharge lamp (Lp) to the auxiliary ignition electrode (ZE), the device having a capacitive component part (C2; C5), which is connected in series with the resonant inductance (L11; L) **characterized in that** the resonant frequency of the series resonant circuit (L11, C1; L, C3) is above 300 kHz, and the capacitance of the capacitive component part (C2; C5) is in the range of from 12 pF to 470 pF, with the result that the capacitive component part (C2; C5) brings about at least partial compensation of the inductance of the resonant inductance (L11; L), through which the lamp current flows, once the gas discharge in the high-pressure discharge lamp (Lp) has been ignited.

2. Device according to Claim 1, the resonant frequency of the series resonant circuit (L11, C1; L, C3) being above 600 kHz.

3. Device according to Claim 1, which is accommodated in the lamp base of the high-pressure discharge lamp.

4. Device according to Claim 1, the ignition device being in the form of a pulse ignition device.

5. Device according to Claim 1, the device having an inductive component (L12), which is coupled to the resonant inductance (L11) of the series resonant circuit (L11, C1) and is formed as part of the ignition device.

6. Device according to Claim 1, the device comprising at least one voltage converter (Q) for producing the current of alternating polarity for the high-pressure discharge lamp (Lp).

7. Method for operating a high-pressure discharge lamp (Lp), which has been provided with an auxiliary ignition electrode (ZE), with a current of alternating polarity, an increased voltage due to resonance being provided at the main electrodes (E1, E2) of the high-pressure discharge lamp (Lp) by means of a series resonant circuit (L11, C1; L, C3), whose resonant inductance (L11; L), once the gas discharge in the high-pressure discharge lamp (Lp) has been ignited, has the lamp current flowing through it, at least during the ignition phase of the high-pressure discharge lamp (Lp), **characterized in that**, the frequency of the current of alternating polarity and the resonant frequency of the series resonant circuit (L11, C1; L, C3) are above 300 kHz, and **in that**, once the gas discharge in the high-pressure discharge lamp (Lp) has been ignited, the inductance of the resonant inductance (L11; L), through which the lamp current flows, of the series resonant circuit (L11, C1; L, C3) is at least partially compensated for by means of a capacitive component part (C2; C5), which has a capacitance in the range of from 12pf to 470 pf and is connected in series therewith.

8. Method according to Claim 7, the resonant frequency of the series resonant circuit (L11, C1; L, C3) being above 600 kHz.

9. Method according to Claim 7, an alternating current being applied to the series resonant circuit (L11, C1; L, C3) for igniting the gas discharge in the high-pressure discharge lamp (Lp), the frequency of said alternating current being in a first frequency range which is close to the resonant frequency of the series resonant circuit (L11, C1; L, C3), and, once the gas discharge in the high-pressure discharge lamp (Lp) has been ignited, an alternating current is applied to the resonant inductance (L11; L) of the series resonant circuit (L11, C1; L, C3) and the high-pressure discharge lamp (Lp), the frequency of said alternating current being arranged in a second frequency range which is below the resonant frequency of the series resonant circuit (L11, C1; L, C3) and is above 300 kHz.

10. Method according to Claim 9, the first frequency range extending to frequencies above the resonant frequency of the series resonant circuit (L11, C1; L, C3).

11. Method according to Claim 9, the frequency of the current provided by the voltage converter (Q) during ignition of the high-pressure discharge lamp (Lp) being greater than the frequency of the current provided after ignition of the high-pressure discharge lamp (Lp).

## Revendications

1. Dispositif pour faire fonctionner une lampe ( Lp ) à décharge à haute pression muni d'une électrode ( ZE ) auxiliaire d'amorçage par un courant de polarité alterné et d'une fréquence plus grande que 300 kHz, le dispositif comprenant un circuit ( L11, C1 ; L, C3 ) de résonance série ayant une inductance ( 111 ; L ) de résonance dans laquelle passe le courant de la lampe pendant que la lampe fonctionne et un dispositif d'amorçage pour appliquer à l'électrode ( ZE ) auxiliaire d'amorçage la tension d'amorçage nécessaire à l'amorçage de la décharge dans un gaz dans la lampe ( Lp ) à décharge à haute pression, dans lequel le dispositif a un élément ( C2 ; C5 ) capacitif qui est monté en série avec l'inductance ( L11 ; L ) de résonance, **caractérisé en ce que** la fréquence de résonance du circuit ( L11 ; C1 ; C3 ) de résonance série est supérieure à 300 kHz et la capacité de l'élément ( C2 ; C5 ) capacitif est comprise entre 12 pF et 470 pF, de sorte que le composant ( C2 ; C5 ) capacitif provoque, après que l'amorçage dans un gaz dans la lampe ( Lp ) à décharge à haute pression a été effectué, au moins une compensation partielle de l'inductance ( L11 ; L ) de résonance dans laquelle passe le courant de la lampe.

2. Dispositif suivant la revendication 1, dans lequel la fréquence de résonance du circuit ( L11 ; C1 ; C3 ) de résonance série est plus grande que 600 kHz.

3. Dispositif suivant la revendication 1, qui est logé dans le culot de la lampe à décharge à haute pression.

4. Dispositif suivant la revendication 1, dans lequel le dispositif d'amorçage est constitué en dispositif d'amorçage par impulsion.

5. Dispositif suivant la revendication 1, dans lequel le dispositif a un composant ( L12 ) inductif qui est couplé à l'inductance ( L11 ) de résonance du circuit ( L11 ; C1 ) de résonance série et qui fait partie du dispositif d'amorçage.

6. Dispositif suivant la revendication 1, dans lequel le dispositif comprend au moins un convertisseur ( Q ) de tension pour la production du courant de polarité alterné pour la lampe ( Lp ) à décharge à haute pression.

7. Procédé pour faire fonctionner une lampe ( Lp ) à décharge à haute pression munie d'une électrode ( 2E ) auxiliaire d'amorçage par un courant de polarité alterné, dans lequel on applique, au moyen d'un circuit ( L11 ; C1 ; C3 ) de résonance série dont l'inductance ( L11 ; L ) de résonance est parcourue, après que l'amorçage de la décharge dans la lampe ( Lp ) à décharge à haute pression a été effectuée, par le courant de la lampe, au moins pendant la phase d'amorçage de la lampe ( Lp ) à décharge à haute pression, une tension amplifiée par résonance sur les électrodes ( E1, E2 ) principales de la lampe ( Lp ) à décharge à haute pression, **caractérisé en ce que** la fréquence du courant de polarité alterné et la fréquence de résonance du circuit ( L11 ; C1 ; L ; C3 ) de résonance série sont plus grandes que 300 kHz et **en ce que**, après que l'amorçage de la décharge dans un gaz dans la lampe ( Lp ) à décharge à haute pression a été effectué, la valeur de l'inductance ( L11 ; L ) de résonance dans laquelle passe le courant de la lampe du circuit ( L11 ; C1 ; L, C3 ) de résonance série peut être compensée, au moins en partie, à l' aide d'un composant ( C2 ; C5 ) capacitif monté en série avec ce circuit et dont la capacité est comprise entre 12 pF et 470 PF.

8. Procédé suivant la revendication 7, dans lequel la fréquence de résonance du circuit ( L11 ; C1 ; C3 ) de résonance série est plus grande que 600 kHz.

9. Procédé suivant la revendication 7, dans lequel on alimente le circuit ( L11 ; C1 ; L ; C3 ) de résonance série pour l'amorçage de la décharge dans un gaz dans la lampe ( Lp ) à décharge à haute pression par un courant alternatif dont la fréquence se trouve dans un premier domaine de fréquence proche de la fréquence de résonance du circuit ( L11 ; C1 ; L ; C3 ) de résonance série et, après que l'amorçage de la décharge dans un gaz dans la lampe ( Lp ) à décharge à haute pression a été effectué, on alimente l'inductance ( L11 ; L ) de résonance du circuit ( L11 ; C1 ; L ; C3 ) de résonance série et la lampe ( Lp ) à décharge à haute pression par un courant alternatif dont la fréquence se trouve dans un deuxième domaine de fréquence en dessous de la fréquence de résonance du circuit ( L11 ; C1 ; L ; C3 ) de résonance série et au dessus de 300 kHz.

10. procédé suivant la revendication 9, dans lequel le premier domaine de fréquence s'étend à des fréquences au dessus de la fréquence de résonance du circuit ( L11 ; C1 ; L ; C3 ) de résonance série.

11. Procédé suivant la revendication 9, dans lequel la fréquence du courant mis à disposition par le convertisseur ( Q ) de tension pendant l'amorçage de la lampe ( Lp ) à décharge à haute pression est plus grande que la fréquence du courant mis à disposition après l'amorçage de la lampe ( Lp ) à décharge à haute pression.
